# EUROPEAN PATENT APPLICATION

(11) **EP 1 281 565 A2**
(43) Date of publication of application: **05.02.2003**
(21) Application number: 02254802.8
(22) Date of filing: 09.07.2002
(51) Int. Cl.: B60N 2/28

(54) **Variable angle vehicle child safety seat**

(30) Priority: 31.07.2001 AU PR668501
(71) Applicant: Britax Childcare Pty Ltd., Sunshine, Melbourne 3020 (AU)
(72) Inventor: Maciejczyk, Wieslaw, Sunshine, Victoria (AU)
(74) Representative: Hollinghurst, Antony

(57) **Abstract**

A reclining child's safety seat has a seat member (3, 36) (3) and a base member (1). The seat member (3) is pivotally mounted to the base member (1) on a transverse axis (5). A link arm (7) extending between the seat member and the base member, is spaced apart from the transverse axis (5). Alteration of the angle of the link arm (7) with respect to the base member (1) by the action of an extendable arm (13, 78, 92) (13), on a formation (15) on the base member (1), varies the amount of recline of the child safety seat.

## Description

This invention relates to a variable angle vehicle safety seat and particularly a safety seat adapted for use by infants and small children.

Infants in an age range of up to about 6 months use a rearwardly facing child seat in a vehicle and this invention is intended to enable such an infants seat to be able to be substantially reclined or have a variable angle of recline.

For children in the range of about 6 months to about 4 or 5 years the safety seat used in a vehicle is a forward facing type of seat and with a child sitting in a more upright position.

A third form of child safety seat is a convertible seat which may be used either as a rearwardly facing infant seat in a more prone position or a forwardly facing child safety seat with the child in a more upright position. The variable angle arrangement of the present invention can be used for reclining the seat in a selected amount in either of these orientations.

In one form the invention is said to reside in a reclining child's safety seat arrangement having a seat member and a base member the seat member being pivotally mounted to the base member on a transverse axis and a link arm extending between the seat member and the base member and spaced apart from the transverse axis and an angle adjustment arrangement to alter of the angle of the link arm with respect to the base member whereby to vary the amount of recline of the child safety seat.

In an alternative form the invention is said to reside in a reclining child safety seat for a vehicle, the seat having a base member, a seat member mounted on the base member and the seat member being adapted to be reclined with respect to the base member, the seat member being mounted to the base member at a first location by a pivot arrangement that allows rotation of the seat member with respect to the base member and at a second location spaced apart from the first location, the second location including a link arm attached at respective ends to the seat member and the base member and an angle adjustment arrangement to alter the orientation of the link arm with respect to the base member to thereby alter the angle of recline of the seat member with respect to the base member.

The first location may include a transverse axis on the seat member and the transverse axis may be adapted to move in a slot or track on the base member on each side thereof.

The angle adjustment arrangement to alter the orientation the link arm with respect to the base member may include an extendable arm on the link arm adapted to engage the base member or a protrusion extending from the base member.

Preferably the extendable arm includes a first male screw threaded portion mounted to the link arm and rotatable with respect to the link arm and a second female screw threaded portion engaged into the first male screw threaded portion and a knob or hand wheel on the link arm to rotate the first male screw threaded portion to move the second female screw threaded portion axially with respect to the first male screw threaded portion to alter the length of the extendable arm and hence the angle of recline of the seat member. The second female screw threaded portion may constrained with respect to the link arm to move only linearly with respect to the link arm. Such constraint may be provided by the second female screw threaded portion being non-circular in cross section and being received in a non-circular recess in the link arm.

The second female screw threaded portion may be adapted to be replaceable by portions of different lengths whereby to provide different ranges of angle of reclining.

Alternatively the extendable arm may include a lever mechanism between the link arm and the extendable arm, the lever mechanism having a lever arm attached to the link arm and moveable with respect to the link arm to thereby alter the length of the extendable arm and hence the angle of recline of the seat member and locking means to lock the lever mechanism at selected extensions of the extension arm.

In a further alternative arrangement the extendable arm includes a tapered spacer block mounted on the link arm and moveable longitudinally or laterally with respect to the link arm and the tapered portion acting against the base member or the protrusion on the base member alter the effective length of the extendable arm and hence the angle of recline of the seat member and locking means to lock the tapered spacer block at selected extensions of the extension arm.

In an alternative arrangement the link arm may be acted upon by a mechanism associated with the base member to change the angle of the link arm with respect to the base member.

The first location may be under a seat portion of the seat member and the link arm may be under a back portion of the seat member.

In an alternative form the invention is said to reside in a reclining mechanism for a child safety seat that enables the safety seat to be used in both a forward and rearward position in a motor vehicle, the reclining mechanism for a child safety seat comprising a seat member, a base member for attachment of the seat thereto, connection means between the seat member and the base member for allowing movement of the seat member with respect to the base member, the movement comprising a first range of reclining movement wherein the seat member is able to be moved between an upright position and a first reclined position and a second range of reclining movement when the seat member further moves between the first reclined position and a second reclined position, stop means preventing said seat member movement from said first reclining position to said second range of reclining movement, said stop means being manually operable to allow release of said seat member into said second range of reclining movement, a latch to hold the seat member in a plurality of positions within at least said first range of reclining movement and a pivotal link between the rear of said seat member and said base member that allows longitudinal movement of the seat member with respect to the base member as well as rotational movement, wherein the second range of reclining movement includes an extension arrangement extending between the pivotal link and base member whereby alteration of the length of the extension arrangement varies the amount recline of the seat member in the second range of reclining movement.

In this embodiment the extension means may be mounted on the pivotal link to act on the base member to vary the orientation of the pivotal link and thereby providing the reclining movement or the extension means may be mounted on the base member and act on the pivotal link to vary the orientation of the pivotal link and thereby providing the reclining movement.

Preferably the first range of reclining movement is used when the safety seat is in a forward safety facing position and the second range of reclining movement is used when the safety seat is in the rear facing position.

It will be seen that by these various forms of the invention that the infants or child safety seat is pivotally mounted to the base of the safety seat and that means are provided to vary the angle of a link between the seat member and base to enable over a selected range the seat member to be reclined or put more upright. Various arrangements may be used to vary the angle of a link between the seat member and base.

Embodiments of the invention will now be described with reference to the accompanying drawings, in which:
Figure 1 shows a schematic side view of an infants safety seat with one embodiment of the recline mechanism of the present invention;
Figure 2 shows the same embodiment as in Figure 1 with the seat in a more upright position;
Figure 3 shows detail of the extension arm system used in the embodiment shown in Figures 1 and 2;
Figure 4 shows the extension arm mechanism of Figure 3 in the extended position;
Figure 5 shows a alternative embodiment of convertible seat incorporating the recline mechanism of the present invention with the child safety seat in the rearward facing position;
Figure 6 shows the embodiment of safety seat shown in Figure 5 with the seat in the upright normally forward facing position;
Figure 7 shows an alternative embodiment of extension arm useful for the present invention; and
Figure 8 shows a still further embodiment of an extension arm according to this invention.

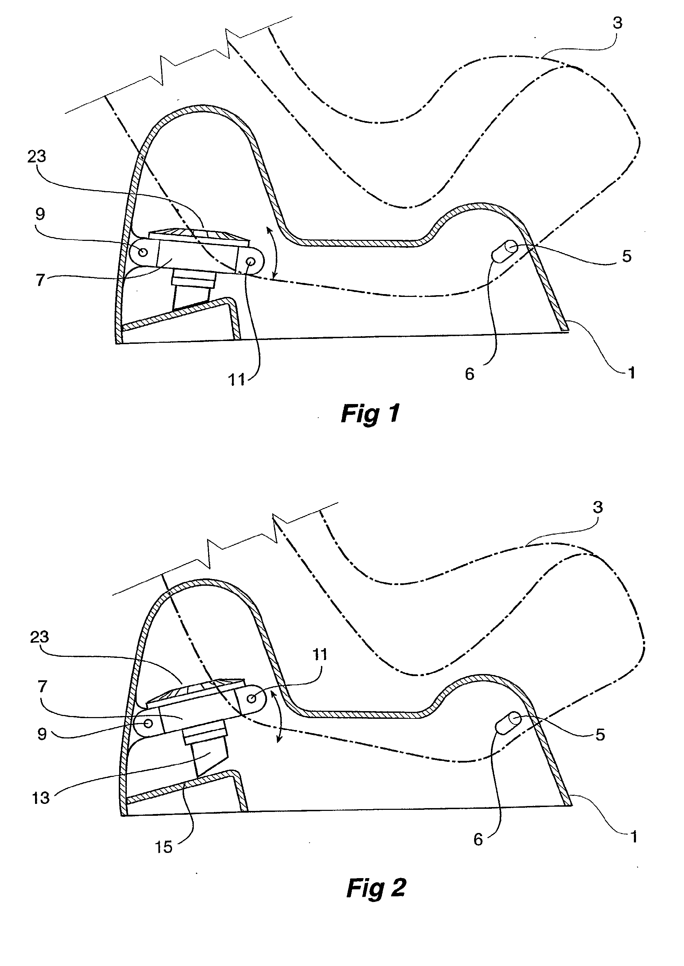

Now looking more closely at the drawings and in particular the embodiment shown in Figures 1 to 4, it will be seen that the infant safety seat of this embodiment comprises generally a base member 1 and a safety seat member 3 pivotally connected on a transverse axis 5. The transverse axis 5 is fixed in the seat member 3 and a slot 6 in the base member 1 allows the axis 5 to move when the angle is being changed. The transverse axis is spaced well forward on the seat member with respect to the direction the infant in the seat is facing. In this embodiment it is shown as a rearwardly facing seat. A link arm 7 is fitted on axis 9 to the base member and on axis 11 to the seat member. Angular movement of the link arm 7 about the axis 9 will cause the angle of the seat member to vary. An extendable arm mechanism 13 on the link arm 7 engages against a projection 15 on the base member 1 and movement of the extendable arm mechanism causes the angle of the link arm with respect to the axis 9 to vary to thereby vary the angle of the seat member 3.

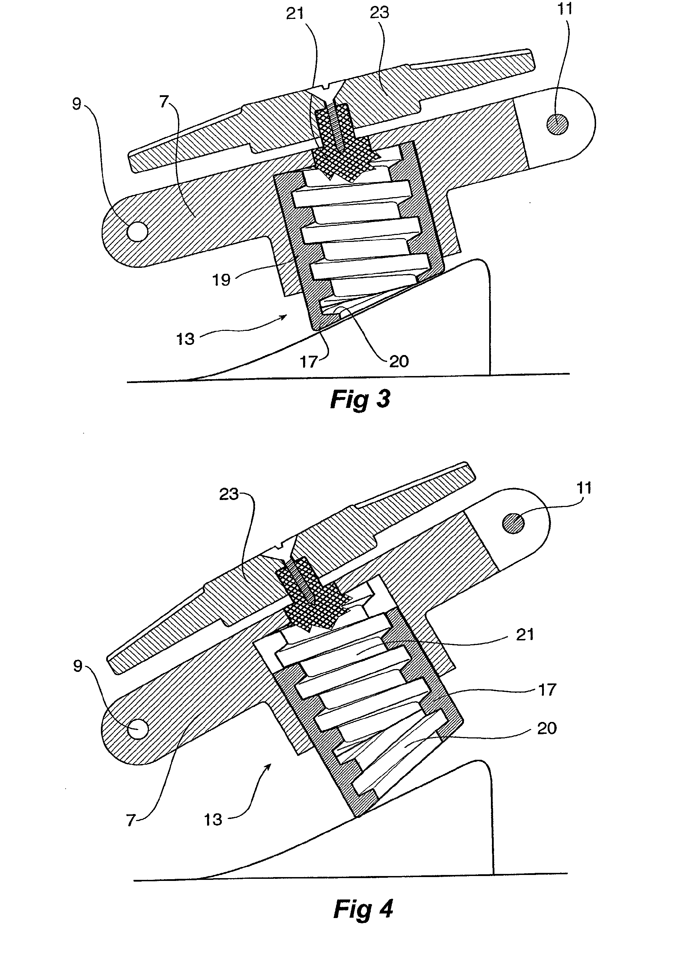

One embodiment of the link arm mechanism 13 is shown in more detail in Figures 3 and 4.

In Figures 3 and 4 the extendable arm mechanism 13 includes an arm 17 with a non-circular cross section mounted into an aperture 19 with a corresponding non-circular cross section in the link arm and having a screw thread 20 within it. A screw threaded rod 21 extends into the thread 20 and has a hand wheel 23 at its other end. Rotation of the hand wheel cause the screw threaded rod 21 to rotate and via the screw thread 20 to thereby move the arm 17 either inwards or outwards with respect to the link arm 7, that is, axially of the screw thread. The walls of the aperture engage with the arm 17 to prevent the arm rotating with respect to the link arm 7. The length of the arm 17 may be different if different ranges of angle of recline are desired.

By rotation of the hand wheel 23, therefore, the angle of recline of the seat member with respect to the base member can be varied to provide more comfort for an infant when required.

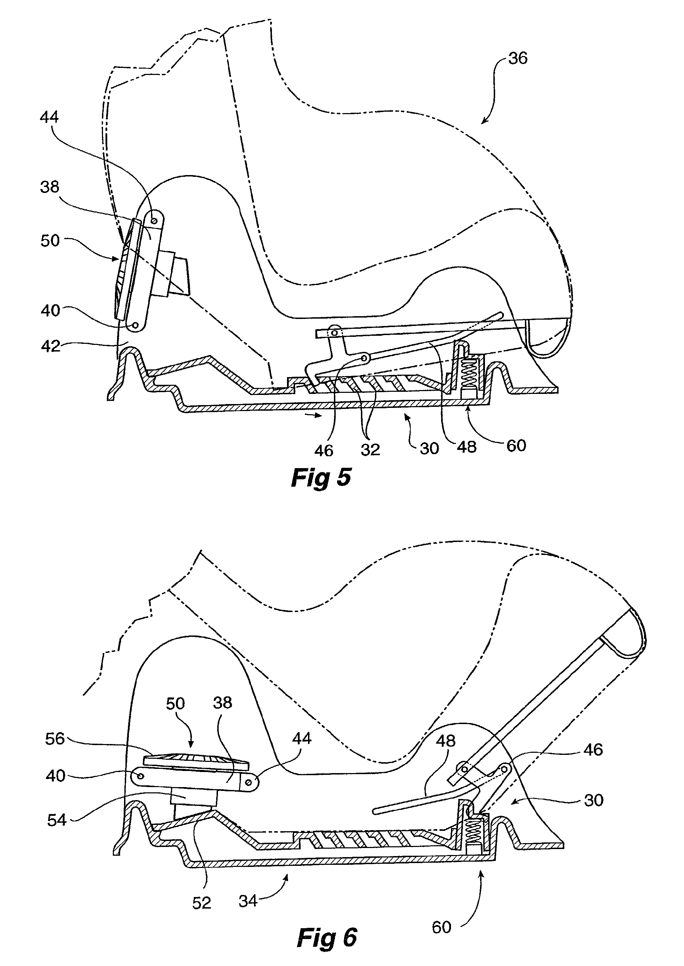

Figures 5 and 6 show an alternative embodiment of child safety seat which is convertible from a more upright forward facing child seat as shown in Figure 5 to a rearward facing infants seat as shown in Figure 6.

Looking in detail at Figure 5, it will seen that in the more upright facing position a latch mechanism (generally shown as 30) engages a series of detents 32 on a base 34 of the seat arrangement. The detents 32 allow a limited range of movement of the recline movement when in the upright position. A safety stop 60 prevents movement beyond range allowed by the detents 32. The seat (generally shown as 36) is pivotally connected to the base member 34 by means of a link arm 38 with a pivot 40 on a side wall 42 of the base member 34 and a pivot 44 mounted into the seat 36. Forward support is provided by a transverse axle 46 which slides in a track 48. In this upright forward facing position the recline angle adjustment mechanism (generally shown as 50) is not used.

As shown in Figure 6, the safety stop 60 has been depressed so that the axle 46 can travel along the track 48 on the base member beyond the safety stop 60 so that the child safety seat is now in a reclined position and suitable for rearwardly facing use with infants. In this configuration the recline angle adjusting mechanism generally shown as 50 is effective as it bears against a projection 52 on the base member 34. The extendable arm 54 can then be extended or rotating by rotation of the hand wheel 56 so that the angle of the link arm 38 with respect to the pivot 40 can be varied to cause the seat to pivot about axle 46 to adjust the amount of recline of the seat 36. The pivot axis 46 will slide along the track 48 as the amount of recline is adjusted.

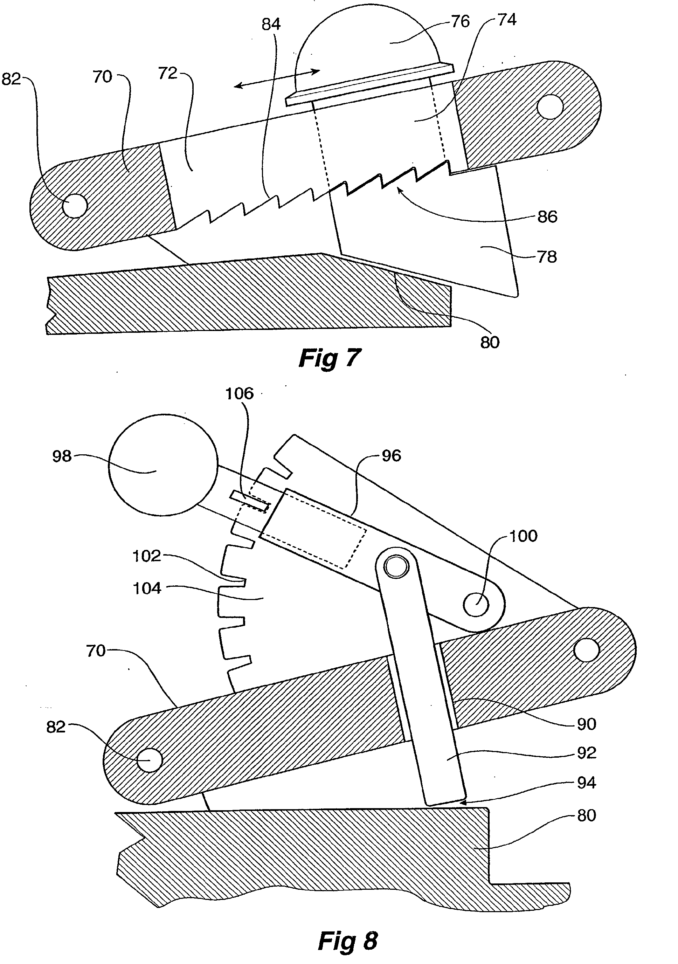

Figure 7 shows an alternative embodiment of extending arm arrangement. In this embodiment the link arm 70 has a longitudinal slot 72 in which slides a bar 74 which has at one end an operating knob 76 and at the other end a tapered projection 78 which engages against a stop 80 on the base member of the seat. Movement of the operating 78 to engage further with the stop 80 on the base member of the seat and therefore to change the angle of the link arm with respect to the pivot 82. A series of detents 84 on the link arm are engaged by teeth 86 on the bar 74 to hold the seat at a selected position.

Figure 8 shows an alternative embodiment of adjustment arm. In this embodiment the link arm 70 has an aperture 90 through it which passes an arm 92. The lower end 94 of the arm 92 engages the stop 80 and the upper arm is fixed to a lever mechanism 96 which includes an operating knob 98 and which pivots about a pivot point 100. Detents 102 in a guide plate 104 enable the lever arm to be set at a number of positions. Spring loaded catch 106 on the lever arm 96 is adapted to engage the detents to select the required angle of recline of the seat.

It will be realised of course that variations in the type and operation of the extendable arm on or in association with the link arm are possible within the scope of the present invention.

Alternative arrangements for altering the angle of the link arm are also within the scope of the invention and may include such devices as a worm wheel engaging with a toothed segment at one end of the link arm.

Throughout this specification various indications have been given as to the scope of the invention but the invention is not limited to any one of these but may reside in two or more of these combined together. The examples are given for illustration only and not for limitation.

## Claims

1. A reclining child safety seat comprising a seat member (3, 36) and a base member (1, 34), the seat member (3, 36) being mounted on the base member (1, 34) at a first location (5, 46) by a mounting arrangement that allows angular movement of the seat member (3, 36) relative to the base member (1, 34), **characterised by** a link arm (7, 38, 70) extending between the seat member (3, 36) and the base member (1, 34) at a second location spaced apart from the first location (5, 46) and an angle adjustment arrangement to alter of the angle of the link arm (7, 38, 70) with respect to the base member (1, 34) whereby to vary the amount of recline of the child safety seat.

2. A reclining child safety seat arrangement according to claim 1, wherein the seat member (3, 36) is pivotally mounted to the base member (1, 34) on a transverse axis (5, 46).

3. A reclining child safety seat according to claim 2, wherein the pivot arrangement at the first location includes a transverse axis (5, 46) on the seat member (3, 36).

4. A reclining child safety seat according to claim 3, wherein the transverse axis (5, 46) is adapted to move in a slot or track on the base member (1, 34) on each side thereof.

5. A reclining child safety seat according to any preceding claim, wherein the angle adjustment arrangement to alter the orientation of the link arm with respect to the base member (1, 34) includes an extendable arm (13, 78, 92) on the link arm adapted to engage the base member (1, 34) or a protrusion (15, 52, 80) extending from the base member (1, 34).

6. A reclining child safety seat according to claim 5, wherein the extendable arm (13, 78) includes a first male screw threaded portion (21) mounted to the link arm (7, 38) and rotatable with respect to the link arm (7, 38) and a second female screw threaded portion (20) engaged into the first male screw threaded portion (21) and a knob or hand wheel (23) on the link arm to enable rotation of the first male screw threaded portion (21) to move the second female screw threaded portion (20) axially with respect to the first male screw threaded portion (21) to alter the length of the extendable arm (13, 78) and hence the angle of recline of the seat member (3, 36).

7. A reclining child safety seat according to claim 6, wherein the second female screw threaded portion (20) is constrained with respect to the link arm (7, 38, 70) to move only linearly with respect to the link arm (7, 38).

8. A reclining child safety seat according to claim 6, wherein the constraint is provided by the second female screw threaded portion (20) being non-circular in cross section and being received in a non-circular recess in the link arm (7, 38).

9. A reclining child safety seat according to claim 6, 7 or 8, wherein the second female screw (20) threaded portion is replaceable by portions of different lengths whereby to provide different ranges of angle of reclining.

10. A reclining child safety seat according to claim 5, wherein the extendable arm (92) includes a lever mechanism between the link arm (70) and the extendable arm (92), the lever mechanism having a lever arm (96) attached to the link arm (70) and moveable with respect to the link arm (70) to thereby alter the length of the extendable arm (92) and hence the angle of recline of the seat member (3, 36), and locking means (102, 106) are provided to lock the lever mechanism at selected extensions of the extendable arm (92).

11. A reclining child safety seat according to claim 5, wherein the extendable arm (13, 78, 92) includes a tapered spacer block (78) mounted on the link arm and moveable linearly with respect to the link arm (70), the tapered block (78) acting against the base member (1, 34) or the protrusion (80) on the base member (1, 34).

12. A reclining child safety seat according to claim 1 or 2, wherein the link arm is acted upon by a mechanism associated with the base member (1, 34) to change the angle of the link arm with respect to the base member (1, 34).

13. A reclining child safety seat as in any preceding claims, wherein the first location (5) is under a seat portion of the seat member (3, 36) and the link arm is under a back portion of the seat member (3, 36).

14. A child safety seat having a reclining mechanism that enables the safety seat to be used in both a forward and rearward position in a motor vehicle, the child safety seat comprising a seat member (36), a base member (34) for attachment of the seat member (36) thereto, connection means between the seat member (36) and the base member (34) for allowing movement of the seat member (36) with respect to the base member (34), **characterised in that** the movement comprises a first range of reclining movement, wherein the seat member (36) is able to be moved between an upright position and a first reclined position and a second range of reclining movement when the seat member (36) further moves between the first reclined position and a second reclined position, stop means (60) preventing said movement from said first reclining position to said second range of reclining movement, said stop means (60) being manually operable to allow release of said seat member (36) into said second range of reclining movement, a latch to hold the seat member (3, 36) in a plurality of positions within at least said first range of reclining movement and a pivotal link (38) between the rear of said seat member (36) and said base member (34) that allows longitudinal movement of the seat member (36) with respect to the base member (34) as well as rotational movement, wherein means for effecting the second range of reclining movement includes an extension arrangement (54) extending between the pivotal link and base member (34), alteration of the length of the extension arrangement varying the amount recline of the seat member (36) in the second range of reclining movement.

15. A reclining mechanism for a child safety seat according to claim 14, wherein the extension arrangement (54) is mounted on the pivotal link (38) and acts on the base member (34) to vary the orientation of the pivotal link and thereby providing the reclining movement.

16. A reclining mechanism for a child safety seat according to claim 14, wherein the extension arrangement is mounted on the base member (34) and acts on the pivotal link (38) to vary the orientation of the pivotal link and thereby providing the reclining movement.

17. A reclining mechanism for a child safety seat according to claim 14, 15 or 16, wherein the first range of reclining movement is used when the safety seat is in a forward safety facing position and the second range of reclining movement is used when the safety seat is in the rear facing position.
